# EUROPEAN PATENT APPLICATION

(11) **EP 2 141 919 A1**
(43) Date of publication of application: **06.01.2010**
(21) Application number: 09156499.7
(22) Date of filing: 27.03.2009
(51) Int. Cl.: H04N 5/445, H04H 60/46, H04H 60/65, H04N 7/16

(54) **Broadcast reception apparatus and operating method thereof**

(30) Priority: 30.06.2008 KR 20080063058
(71) Applicant: SAMSUNG ELECTRONICS CO., LTD., Suwon-si, Gyeonggi-do (KR)
(72) Inventor: Choi, Jung-hwa, Yongin-si (KR)
(74) Representative: Waddington, Richard

(57) **Abstract**

A broadcast reception apparatus and an operating method thereof are provided. In order to prevent preference information which a viewer does not expose from being transmitted to a broadcasting station (200), the broadcast reception apparatus transmits limited preference information regarding broadcast programs or additional information to the broadcasting station. Accordingly, the viewer privacy can be protected, and the viewer can receive only desired information from the broadcasting station. The preference information may not be sent at all in another embodiment.

## Description

### BACKGROUND OF THE INVENTION

### 1. Field of the Invention

Apparatuses and methods consistent with the present invention relate to a broadcast reception apparatus and an operating method thereof, and more particularly, to a broadcast reception apparatus for two-way broadcast services and an operating method thereof.

### 2. Description of the Related Art

Using two-way broadcast services, viewers can view broadcast programs provided by broadcasting stations, viewers' reaction to broadcast programs can be transmitted to broadcasting stations, and viewers can transmit requests for desired information to broadcasting stations and use the desired information.

In general, if broadcast reception apparatuses are turned on, broadcast stations broadcast menus without taking into consideration viewer preferences. If a viewer selects desired content from the menus, a broadcasting station provides the broadcast reception apparatus with information on the type of content the viewer desires to view, that is, a category to which the content belongs, as menu. Accordingly, if the viewer selects a desired category, the broadcast reception apparatus receives broadcast programs related to the selected category from the broadcasting station and provides the viewer with the broadcast programs in video and audio formats. In addition, the viewer can receive diverse additional information related to broadcast programs from a broadcasting station through the broadcast reception apparatus.

### SUMMARY OF THE INVENTION

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

According to the present invention there is provided an apparatus and method as set forth in the appended claims. Other features of the invention will be apparent from the dependent claims, and the description which follows.

An aspect of the present invention provides a broadcast reception apparatus which prevents detailed personal preference information from being transmitted to broadcasting stations so as to protect viewer privacy, and an operating method thereof.

According to an exemplary aspect of the present invention, there is provided a broadcast reception apparatus comprising a storage unit which stores preference information regarding a broadcast service provided by a broadcasting station, an interface unit which transmits limited preference information regarding the broadcast service to the broadcasting station, and a control unit which controls a menu, which is generated by the broadcasting station based on the limited preference information, to be displayed on a screen if the menu is received from the broadcasting station.

Information included in the broadcast service may be classified according to a plurality of layers and a plurality of categories, and the control unit may control the interface unit to transmit the preference information stored in the storage unit to the broadcasting station by excluding at least one of preset limited layers and limited categories in the preference information.

The storage unit may store a category list of broadcast programs included in the broadcast service provided by the broadcasting station and a list of additional information included in the broadcast service in the order of preference.

The storage unit may store the preference information regarding the broadcast service in a tree-structure database format.

The control unit may analyze view preferences regarding the broadcast programs included in the broadcast service, and usage preference of the additional information included in the broadcast service, and store the analysis result in the storage unit.

The control unit may generate a limit menu for setting the limited layers and the limited categories.

The control unit may update the preference information stored in the storage unit.

According to another exemplary aspect of the present invention, there is provided a method for operating a broadcast reception apparatus, the method including storing preference information regarding a broadcast service provided by a broadcasting station, transmitting limited preference information regarding the broadcast service to the broadcasting station, and displaying a menu, which is generated by the broadcasting station based on the limited preference information, on a screen if the menu is received from the broadcasting station.

Information included in the broadcast service may be classified according to a plurality of layers and a plurality of categories, and in the transmitting operation, the stored preference information may be transmitted to the broadcasting station by excluding at least one of preset limited layers and limited categories in the preference information.

In the storing operation, a category list of broadcast programs included in the broadcast service provided by the broadcasting station and a list of additional information included in the broadcast service may be stored in the order of preference.

In the storing operation, the preference information regarding the broadcast service may be stored in a tree-structure database format.

Before the storing operation, the method according may further include analyzing view preferences regarding the broadcast programs included in the broadcast service, and analyzing usage preference of the additional information included in the broadcast service.

Before the transmitting operation, the method may further include generating a limit menu for setting the limited layers and the limited categories.

The method may further include updating the stored preference information.

### BRIEF DESCRIPTION OF THE DRAWINGS

The above and/or other aspects of the present invention will be more apparent by describing certain exemplary embodiments of the present invention with reference to the accompanying drawings, in which:
FIG. 1 is a schematic block diagram of a broadcast reception apparatus according to an exemplary embodiment of the present invention;
FIG. 2 is a drawing provided to describe a method for limiting preference information using a broadcast reception apparatus according to an exemplary embodiment of the present invention; and
FIG. 3 is a flow chart of a method for operating a broadcast reception apparatus according to an exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

In the following description, like drawing reference numerals are used for like elements, even in different drawings. The matters defined in the description, such as detailed construction and elements, are provided to assist in a comprehensive understanding of the invention. However, the present invention can be practiced without those specifically defined matters. Also, well-known functions or constructions are not described in detail since they would obscure the invention with unnecessary detail.

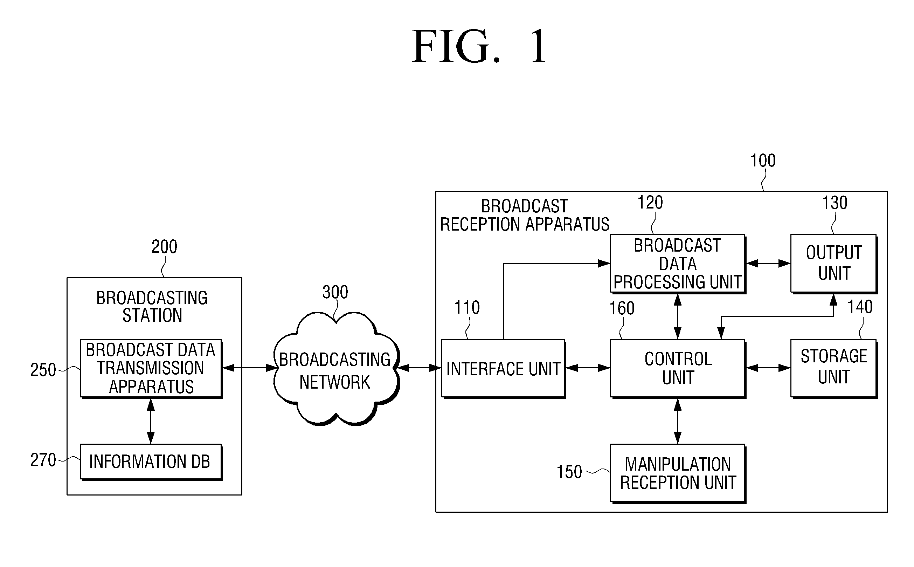

FIG. 1 is a schematic block diagram of a broadcast reception apparatus according to an exemplary embodiment of the present invention.

Referring to FIG. 1, the broadcast reception apparatus 100 communicates with a broadcasting station 200 via a broadcasting network 300, and includes an interface unit 110, a broadcast data processing unit 120, an output unit 130, a storage unit 140, a manipulation reception unit 150, and a control unit 160.

The interface unit 110 receives broadcast services from the broadcasting station 200 according to control of the control unit 160, transmits viewer request commands, which are input to the broadcast reception apparatus 100 in order to request information from the broadcasting station 200, to the broadcasting station 200, and transmits viewer information to the broadcasting station 200 if necessary.

The broadcast data processing unit 120 processes broadcast services so that the viewer can view broadcast services. That is, broadcast data related to a broadcast service received through the interface unit 110 is separated into video data, audio data, and additional data, and processed.

The output unit 130 outputs video data processed by the broadcast data processing unit 120 as images, and outputs audio data processed by the broadcast data processing unit 120 as sound. The output unit 130 outputs additional data processed by the broadcast data processing unit 120 as images with the video data or as sound with the audio data. The output unit 130 may include an output terminal through which the video data, audio data, and additional data processed by the broadcast data processing unit 120 are transmitted to external devices (not shown).

The storage unit 140 stores diverse software and data which are needed to operate the broadcast reception apparatus 100. In addition, view preferences with respect to broadcast programs viewed by the viewer and a list of additional information which is mainly used by the viewer are stored in the storage unit 140 in a database (DB) format. That is, a list of categories of the viewed broadcast programs is formed in a tree format, and a list of additional information used by the viewer forms is formed as a lower layer of each category.

In addition, the storage unit 140 stores a preference setting state based on the stored database to be transmitted to the broadcasting station 200. That is, in order to transmit viewing preferences representing which category is usually viewed by the viewer and additional information usage preferences representing which additional information is usually used to the broadcasting station 200, the storage unit 140 stores limited preference information to prevent detailed information of the viewer from being transmitted to the broadcasting station 200.

The manipulation reception unit 150 receives viewer commands to control the operation of the broadcast reception apparatus 100, responds to broadcast services provided by the broadcasting station 200, or receives viewer commands to request information to the broadcasting station 200. In addition, the manipulation reception unit 150 receives viewer commands to limit preference information so that all the detailed preference information stored in the storage unit 140 cannot be transmitted to the broadcasting station 200.

The control unit 160 controls the broadcast reception apparatus 100 using the software stored in the storage unit 140, and operates the broadcast reception apparatus 100 according to viewer commands input through the manipulation reception unit 150.

In greater detail, the control unit 160 analyzes viewing preferences with respect to broadcast programs frequently viewed by the viewer, and analyzes which additional information the viewer uses, so that the analyzed information is stored in the storage unit 140. In addition, the control unit 160 generates a preference information limit menu using the manipulation reception unit 150 in order to prevent detailed preference information from being transmitted to the broadcasting station 200. Furthermore, the control unit 160 controls the interface unit 110 to transmit limited preference information to the broadcasting station 200 according to a viewer command to limit the preference information.

If a menu generated based on the limited preference information is received from the broadcasting station 200, the control unit 160 controls the broadcast data processing unit 120 and the output unit 130 to display the menu on a screen. The control unit 160 updates the database stored in the storage unit 140 by continuing analyzing the view preferences and the additional information usage propensity of the viewer.

The broadcasting station 200 includes a broadcast data transmission apparatus 250 which transmits broadcast data to the broadcast reception apparatus 100 and receives viewer commands or viewer information from the broadcast reception apparatus 100. The broadcasting station 200 further includes an information database (DB) 270 which stores preference information transmitted from the broadcast reception apparatus 100 for each viewer. That is, FIG. 1 illustrates the single broadcast reception apparatus 100 as an example, but there may be a plurality of broadcast reception apparatuses and the information database 270 stores preference information transmitted from each of the broadcast reception apparatuses. In order to provide a certain broadcast reception apparatus 100 with a menu, the broadcasting station 200 generates the menu based on preference information transmitted from the broadcast reception apparatus 100 and transmits the generated menu to the broadcast reception apparatus 100.

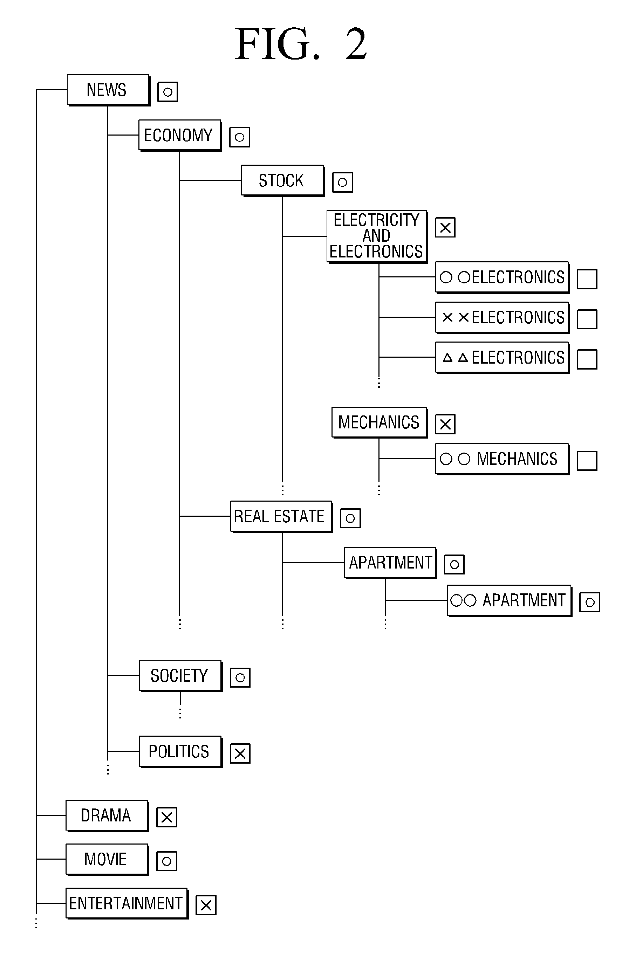

FIG. 2 is a drawing provided to describe a method for limiting preference information using a broadcast reception apparatus according to an exemplary embodiment of the present invention.

In FIG. 2, a list of categories of broadcast programs viewed by the viewer and a list of additional information frequently used by the user are formed in a tree format. Categories of each layer are arranged in the order of view preference, and the list of additional information is arranged in the order of additional information usage preference according to each category.

That is, referring to FIG. 2, the viewer frequently views broadcast programs in the order of news-drama-movie-entertainment on the highest layer, frequently views news in the order of economy-society-politics and frequently view economy news in the order of stock-real estate and so forth. The viewer most frequently uses additional information regarding "OO electronics" from among items regarding "electricity and electronics" while viewing news regarding stock.

As described above, the list of categories regarding broadcast programs is arranged in the order of view preferences, and a list of additional information used by the viewer for each category is arranged in the order of usage preferences, so these lists are stored in the storage unit 140 as a database of a tree format. The control unit 160 generates a preference limit menu based on the database and displays the preference limit menu on the screen. Subsequently, using the preference limit menu, the viewer can prevent detailed preference information from being transmitted to the broadcasting station 200.

For example, in FIG. 2, if the viewer wishes to view only broadcast programs regarding news and movie from among the highest categories of news, drama, movie, and entertainment, the viewer selects the news category and the movie category (expressed as "O" in FIG. 2), and the drama category and the entertainment category are not selected (expressed as "X" in FIG. 2). In addition, if the viewer wishes to view only news regarding economy and society from among diverse news, the viewer selects only the corresponding categories. In greater detail, if the viewer wishes to view only economic news regarding stock and real estate from among news regarding economy, the viewer selects only the corresponding categories.

Regarding additional information, in order to prevent usage preferences representing stock information of which companies are frequently used from being transmitted to the broadcasting station 200, the viewer does not select the electricity and electronics category and the mechanics category under the stock category. However, if the viewer wishes to receive additional information regarding "OO apartment" from the broadcasting station 200, the viewer selects the apartment category and selects "OO apartment" under the apartment category.

As described above, if the viewing preferences and the additional information usage preferences are limited, the viewer receives a menu on which "news-economy-stock," "news-economy-real estate-apartment-OO apartment," "news-society," or "movie" can be selected, from the broadcasting station 200. Accordingly, the viewer can easily use additional information regarding "OO apartment" by selecting "news-economy-real estate-apartment-OO apartment." In addition, the viewer can select "news-economy-stock" in order to view news regarding stock, and can select and identify additional information for each item such as "electricity and electronics" and "mechanics" if necessary. That is, in FIG. 2, since "electricity and electronics" and "mechanics" are not selected, it is prevented that the broadcasting station 200 provides the viewer with additional information regarding only "OO electronics," "XX electronics," and "Δ Δ electronics."

In FIG. 2, a method for limiting preference information is illustrated by putting "O" or "X" into check boxes of the preference information limit menu, but the form of menu is not limited thereto.

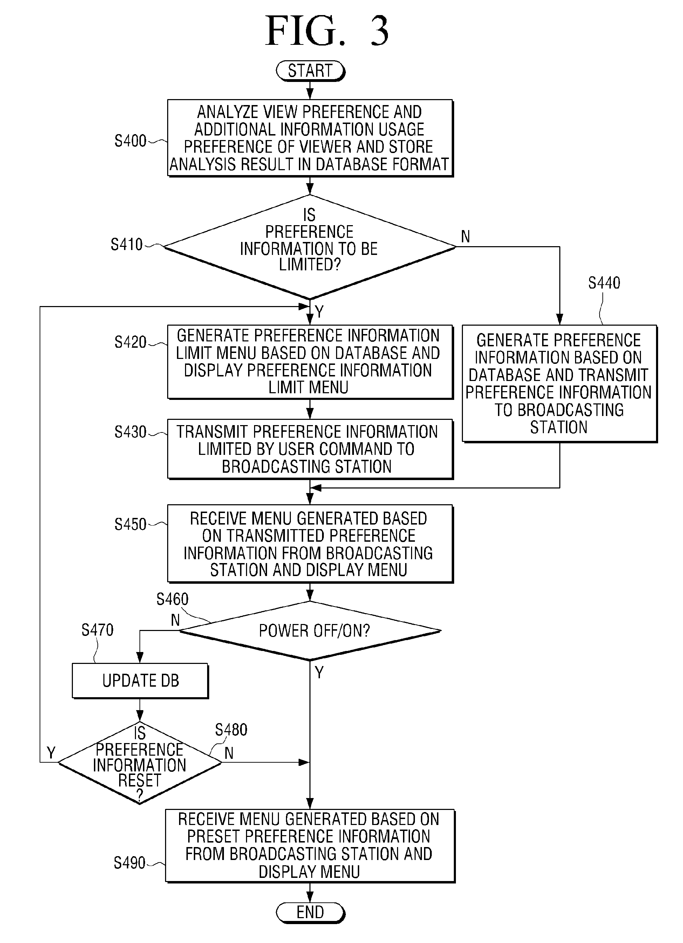

FIG. 3 is a flow chart of a method for operating a broadcast reception apparatus according to an exemplary embodiment of the present invention.

Referring to FIG. 3, the control unit 160 analyzes view preferences and additional information usage preferences of the viewer and stores the analysis result in the storage unit as a database format (S400). That is, as described with reference to FIG. 2, the category list of broadcast programs viewed by the viewer is arranged in the order of view preferences, and the list of additional information frequently used by the user is arranged in the order of additional information usage preferences according to each category, so these lists are stored in the storage unit 140.

If the viewer wishes to limit the preference information that is to be transmitted to the broadcasting station 200 (S410-Y), the control unit 160 generates a preference information limit menu based on the database and displays the preference information limit menu on the screen (S420). That is, as illustrated in FIG. 2, in order to prevent detailed preference information stored in the storage unit 140 from being transmitted to the broadcasting station 200, the preference information limit menu is generated and displayed on the screen.

Subsequently, the control unit 160 transmits the preference information limited by user commands to the broadcasting station 200 (S430). That is, the control unit 160 controls the interface unit 110 to transmit the limited preference information to the broadcasting station 200. Then, the control unit 160 receives a menu generated by the broadcasting station 200 based on the limited preference information from the broadcasting station 200 and displays the menu (S450). That is, as illustrated in FIG. 2, the broadcasting station 200 receives the limited preference information, generates a menu on which "news-economy-stock," "news-economy-real estate-apartment-OO apartment," "news-society," or "movie" can be selected, and transmits the menu to the broadcast reception apparatus 100. Subsequently, the control unit 160 controls the interface unit 110 to receive the menu from the broadcasting station 200, and controls the broadcast data processing unit 120 and the output unit 130 to process and display the menu on the screen.

In operation S410, if the viewer does not wish to limit the preference information that is to be transmitted to the broadcasting station 200 (S410-N), the control unit 160 generates preference information based on the database and transmits the preference information to the broadcasting station 200 (S440). Accordingly, the preference information is not limited, and all of the detailed preference information stored in the storage unit 140 is transmitted to the broadcasting station 200. Subsequently, the control unit 160 receives a menu generated by the broadcasting station 200 based on the preference information from the broadcasting station 200, and displays the menu (S450).

If the broadcast reception apparatus 100 is turned off and then turned on (S460-Y), the control unit 160 receives a menu generated based on the preset preference information from the broadcasting station 200 and displays the menu on the screen (S490). That is, the broadcasting station 200 generates a menu based on the preference information which was received before, and transmits the menu to the broadcast reception apparatus 100, so the broadcast reception apparatus 100 displays the menu generated based on the preset preference information.

If the broadcast reception apparatus 100 is not turned off (S460), the control unit 160 continues analyzing view preferences and additional information usage preferences of the viewer and updating the database (S470). If the viewer wishes to reset the preference information (S480-Y), operation S420 is performed. In operation S480, if preference information is not reset (S480-N), the control unit 160 receives a menu generated by the broadcasting station 200 based on the preset preference information from the broadcasting station 200, and displays the menu (S490). That is, the control unit 160 receives the menu generated by the broadcasting station 200 based on the updated database from the broadcasting station 200, and display the menu.

By this process, it is possible to limit preference information to be transmitted to the broadcasting station 200. In the exemplary embodiment of the present invention, the preference information is stored as the database having layers, but the storage format is not limited thereto

As can be appreciated from the above description, viewers can receive broadcast services according to their taste, and detailed preference information which needs to be protected for the viewer's privacy can be prevented from being exposed by transmitting limited preference information to broadcasting stations. As a result, unnecessary advertisements caused due to exposure of the detailed preference information can be prevented from being provided to viewers.

It is also possible not to send the preference information to the broadcasting station 200 at all. In such a case, the process would be similar to the process shown in FIG. 3 except that the preference information (either limited or not) would be stored in the storage unit 140 instead of transmitting it to the broadcasting station. Furthermore, instead of receiving the menu from the broadcasting station, the menu may be generated by the broadcast reception apparatus 100 based upon the stored preference information (either limited or not). Thus, the menu may be used to show only the menu items that correspond to the limited categories of broadcast programs and/or additional information (if the user chose to limit the preference information) of the broadcast service indicated by the preference information. Finally, the stored preference information may be updated upon further viewing and/or usage of the broadcast service by the user.

The foregoing exemplary embodiments are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast reception apparatus, comprising:
a storage unit (140) which stores preference information regarding a broadcast service provided by a broadcasting station (200);
an interface unit (110) which transmits limited preference information regarding the broadcast service to the broadcasting station (200); and
a control unit (160) which controls a menu, which is generated by the broadcasting station (200) based on the limited preference information, to be displayed on a screen if the menu is received from the broadcasting station (200).

2. The broadcast reception apparatus according to claim 1, wherein information included in the broadcast service is classified according to a plurality of layers and a plurality of categories, and
the control unit (160) controls the interface unit (110) to transmit the preference information stored in the storage unit (140) to the broadcasting station (200) by excluding at least one of preset limited layers and limited categories in the preference information.

3. The broadcast reception apparatus according to claim 1 or claim 2, wherein the storage unit (140) stores a category list of broadcast programs included in the broadcast service provided by the broadcasting station (200) and a list of additional information included in the broadcast service in the order of preference.

4. The broadcast reception apparatus according to any one of claims 1 to 3, wherein the preference information is stored in a tree-structure database format.

5. The broadcast reception apparatus according to any preceding claim, wherein the control unit (160) analyzes view preferences regarding the broadcast programs included in the broadcast service, and usage preference of the additional information included in the broadcast service, and stores the analysis result in the storage unit (140).

6. The broadcast reception apparatus according to claim 1 or 2, wherein the control unit (160) generates a limit menu for setting the limited layers and the limited categories.

7. The broadcast reception apparatus according to any preceding claim, wherein the control unit (160) updates the preference information stored in the storage unit (140).

8. A method for operating a broadcast reception apparatus, the method comprising:
storing preference information regarding a broadcast service provided by a broadcasting station (200);
transmitting limited preference information regarding the broadcast service to the broadcasting station (200); and
displaying a menu, which is generated by the broadcasting station (200) based on the limited preference information, on a screen if the menu is received from the broadcasting station (200).

9. The method according to claim 8, wherein information included in the broadcast service is classified according to a plurality of layers and a plurality of categories, and
in the transmitting operation, the stored preference information is transmitted to the broadcasting station (200) by excluding at least one of preset limited layers and limited categories in the preference information.

10. The method according to claim 8 or claim 9, wherein in the storing operation, a category list of broadcast programs included in the broadcast service provided by the broadcasting station (200) and a list of additional information included in the broadcast service are stored in the order of preference.

11. The method according to any one of claims 8 to 10, wherein the preference information is stored in a tree-structure database format.

12. The method according to any one of claims 8 to 11, further comprising, before the storing operation;
analyzing view preferences regarding the broadcast programs included in the broadcast service; and
analyzing usage preference of the additional information included in the broadcast service.

13. The method according to claim 8 or 9, further comprising, before the transmitting operation;
generating a limit menu for setting the limited layers and the limited categories.

14. The method according to any one of claims 8 to 13, further comprising, after the storing operation;
updating the stored preference information.

15. The method according to any one of claims 8 to 14, wherein the preference information is determined based upon the viewing and/or use preference of the user.
